# EUROPEAN PATENT SPECIFICATION

(11) **EP 4 096 161 B1**
(45) Date of publication and mention of the grant of the patent: **21.08.2024**
(21) Application number: 21175679.6
(22) Date of filing: 25.05.2021
(51) Int. Cl.: H04L 41/042, H04L 41/0853, G05B 19/418

(54) **FACILITATING TIME SENSITIVE NETWORK CONFIGURATION FOR OPERATING A DISTRIBUTED CONTROL SYSTEM**
ERLEICHTERUNG DER KONFIGURATION EINES ZEITEMPFINDLICHEN NETZWERKS ZUM BETRIEB EINES VERTEILTEN STEUERUNGSSYSTEMS
FACILITATION DE LA CONFIGURATION D'UN RÉSEAU SENSIBLE AU TEMPS POUR L'EXPLOITATION D'UN SYSTÈME DE COMMANDE DISTRIBUÉ

(43) Date of publication of application: 30.11.2022
(73) Proprietor: ABB Schweiz AG, 5400 Baden (CH)
(72) Inventor: BRAUN, Roland, 53859 Niederkassel Lülsdorf (DE); GOGOLEV, Alexander, 85221 DACHAU (DE); AKERBERG, Johan, 72595 Västerås (SE)
(74) Representative: Maiwald GmbH

(56) References cited:
- BOHM MARTIN ET AL: "Multi-Domain Time-Sensitive Networks - An East-Westbound Protocol for Dynamic TSN-Stream Configuration Across Domains", 2019 24TH IEEE INTERNATIONAL CONFERENCE ON EMERGING TECHNOLOGIES AND FACTORY AUTOMATION (ETFA), IEEE, 10 September 2019 (2019-09-10), pages 1363 - 1366, XP033633569, DOI: 10.1109/ETFA.2019.8869280
- ANONYMOUS: "IEEE Standard for Local and Metropolitan Area Networks--Bridges and Bridged Networks -- Amendment 31: Stream Reservation Protocol (SRP) Enhancements and Performance Improvements", IEEE STANDARD, IEEE, PISCATAWAY, NJ USA, 29 October 2018 (2018-10-29), pages 1 - 208, XP068132839, ISBN: 978-1-5044-5064-5, [retrieved on 20181029], DOI: 10.1109/IEEESTD.2018.8514112
- 5G ALLIANCE FOR CONNECTED INDUSTRIES AND AUTOMATION: "Integration of 5G with Time-Sensitive Networking for Industrial Communications, 5G-ACIA White Paper White Paper", 1 February 2021 (2021-02-01), pages 1 - 47, XP055851264, Retrieved from the Internet <URL:https://5g-acia.org/wp-content/uploads/2021/04/5G-ACIA_IntegrationOf5GWithTime-SensitiveNetworkingForIndustrialCommunications.pdf> [retrieved on 20211014]
- HELLMANNS DAVID ET AL: "Scaling TSN Scheduling for Factory Automation Networks", 2020 16TH IEEE INTERNATIONAL CONFERENCE ON FACTORY COMMUNICATION SYSTEMS (WFCS), IEEE, 27 April 2020 (2020-04-27), pages 1 - 8, XP033779940, DOI: 10.1109/WFCS47810.2020.9114415

## Description

### FIELD OF THE INVENTION

The invention relates to the field of distributed control systems for industrial plants that use a time sensitive network for communication.

### BACKGROUND

A distributed control system, DCS, comprises a plurality of controllers. Each controller communicates with a plurality of subordinate devices. Subordinate devices may comprise sensors that deliver measurement values from within an industrial process, or actuators that physically act upon this process. Controllers may, for example, communicate with actuators such that a desired quantity of the process, such as a temperature or a pressure in a vessel as measured by a sensor, is kept at a desired set-point value.

This means that the communication between controllers and subordinate devices may be part of the feedback loop of the industrial process, which makes such communication time-critical. If there is an undue delay either in the delivery of measurement values from sensors or in the delivery of commands to actuators, the industrial process may escalate. For example, a pressure in a vessel may rise beyond the physical limits of the vessel before there is a chance to take action and bring the pressure down.

For time-critical communication like this, time sensitive networks, TSN, that build upon traditional Ethernet networks are well-known in the art. WO 2020/136 487 A2 discloses a controller for process plants that is able to communicate in a network with a mixture of TSN devices and non-TSN devices. Configuration of a TSN as a whole may be quite complex and time-consuming depending on the number of participants.

(M. Bohm et al., "Multi-Domain Time-Sensitive Networks - An East-Westbound Protocol for Dynamic TSN-Stream Configuration Across Domains", 2019 24th International Conference on Emerging Technologies and Factory Automation (ETFA), 1363-1366, doi: 10.1109/ETFA.2019.8869280) discloses an east-westbound communication protocol for TSN networks. With the help of such an east-westbound protocol, control-plane instances may negotiate the establishment of communication paths across multiple networks.

("IEEE Standard for Local and Metropolitan Area Networks - Bridges and Bridged Networks - Amendment 31: Stream Reservation Protocol (SRP) Enhancements and Performance Improvements" (2018), ISBN: 978-1-5044-5064-5, doi: 10.1109/IEEESTD.2018.8514112) discloses an IEEE standard for bridges and bridged networks.

(5G Alliance for Connected Industries and Automation: "Integration of 5G with Time-Sensitive Networking for Industrial Communications, 5G-ACIA White Paper" (2021), https://5g-acia.org/wp-content/uploads/2021/04/5G-ACIA_IntegrationOf5GWithTime-SensitiveNefiniorkingForIndustrialCommunications.pdf) discloses how to integrate 5G public land mobile communication networks with TSN networks for industrial communications.

(D. Hellmanns et al., "Scaling TSN Scheduling for Factory Automation Networks", 2020 16th IEEE International Conference on Factory Communication Systems (WFCS), 1-8, doi: 10.1109/WFCS47810.2020.9114415) discloses a scheduling model for converged TSN networks supporting different traffic types, as well as a novel procedure for schedule planning of isochronous traffic which exploits the hierarchical structure of factory networks.

### OBJECTIVE OF THE INVENTION

It is therefore an objective of the present invention to reduce the burden of configuring a TSN that is used for communication in a DCS.

This objective is achieved by the method according to the independent claim. Further advantageous embodiments are detailed in the dependent claims.

### DISCLOSURE OF THE INVENTION

The invention is defined by the appended claims.

The invention provides a method for operating a distributed control system, DCS, of an industrial plant. This DCS comprises a plurality of controllers. Each such controller is configured to communicate with a plurality of subordinate devices over a time sensitive network, TSN. A TSN is a network with mechanisms for making the time at which data is transmitted more deterministic, so as to make it more likely, or even guarantee, that information is transferred between participants (nodes) of the network within a predetermined time.

The controllers may, for example, be programmable logic controllers, PLC that are usable for a wide range of industrial processes. Subordinate devices may, for example, comprise
- sensors that measure state variables of the industrial process, the industrial plant, and/or the environment of the plant, such as a pressure, a temperature, a voltage, an amperage, a pH value, or a concentration of a chemical substance; and/or
- actuators that act upon the industrial process, such as heaters, pumps or valves; and/or
- lower-level controllers that communicate with further subordinate devices in order to control some desired quantity to remain at a given set-point value.

The method starts with providing a control application. This control application has been engineered to operate the DCS as a whole. For example, it may have been engineered to run a particular process, such as the manufacture of a particular product, on the industrial plant. The control application orchestrates the work of the different controllers. For each controller, it comprises instructions to contact particular to-be-used subordinate devices and perform control logic using these subordinate devices. These to-be-used devices may form only a subset of all the subordinate devices with which the respective controller is to communicate. For example, when running a first process, a particular controller may need to use subordinate devices A, C and E, and when running a second process, this particular controller may need to use subordinate devices A, B, C and F.

Each controller obtains information about TSN capabilities of the to-be-used subordinate devices. This may, for example, comprise querying the TSN capabilities from this subordinate device or from any other suitable entity. But the TSN capabilities may also, for example, be pre-stored in a table or other data structure in the controller and looked up according to an identification of the subordinate device.

For example, TSN capabilities of at least one subordinate device are obtained by an Open Platform Communication Unified Architecture, OPC UA, client on a controller querying an OPC UA server on at least one subordinate device. OPC UA is an open standard that facilitates the access to particular desired information across the borders between different manufacturers. In many DCS, subordinate devices from a wide variety of manufacturers are used, while the controllers are procured from a far lesser variety of manufacturers. In particular, field devices as subordinate devices may have a much longer service life than controllers.

Each controller computes a TSN communication schedule for communication between this controller and the to-be-used subordinate devices. For example, this communication schedule may comprise time slots for reading data from each to-be-used subordinate device and for writing data to each to-be-used subordinate device. Alternatively or in combination to this, if the communication between the controller and the subordinate devices happens in fixed cycles, the schedule may comprise an offset by which the start of such a cycle is shifted.

Each controller performs the control logic with the to-be-used devices according to the communication schedule. This causes the DCS, and the process to be run by the industrial plant, as engineered in the control application. Performing the control logic may, in particular, also comprise providing, by each controller, scheduling configuration to the respective subordinate devices.

Shifting the responsibility for the communication schedule from the superordinate control application to the individual controllers constitutes a paradigm shift. Previously, the TSN was frequently perceived as a "common access medium" like a network bus, which dictated establishing the whole configuration of the TSN in a monolithic manner in order to avoid any possible conflict or collision in data exchange. Depending on the number of controllers and subordinate devices in the network, this monolithic configuration could grow quite complex. Decentralizing the scheduling onto the controllers greatly reduces the complexity and improves the flexibility. This is in some way analogous to operating a train network that spans an entire country: While it is certainly true that a centralized scheduling of the whole network may maximize utilization of the network and eliminate collisions between trains, it becomes exceedingly complex to compute such a monolithic schedule. Moreover, in case of any unexpected deviations from the schedule, the whole monolithic schedule becomes invalid. It is then very difficult to bring the monolithic schedule in line again with what is actually happening.

In particular, the decentralized scheduling may exploit the fact that TSN is built on top of Ethernet. Ethernet is a switched network, i.e., it is divided into segments that are connected together by switches. All traffic that originates within one segment and has a destination within the same segment will travel only within this one segment, and this traffic cannot collide with traffic in other segments.

Provided that the TSN comprises different segments that are separated from one another by Ethernet switching, it may be determined whether
- a controller is the only controller within a segment; and
- according to the control logic, this controller is only to communicate with subordinate devices within the same segment.

If both conditions are fulfilled, then this controller may be allowed to schedule its communication independently from TSN communication schedules computed by other controllers.

For example, if the TSN consists of different branches, with each branch comprising one controller and all the subordinate devices that this controller needs to communicate with, and these branches are isolated from one another by switches, each controller may schedule communication with all its to-be-used subordinate devices on its own without considering communication schedules of any other controller. In many DCS, one particular controller, such as a PLC, may be assigned to manage a specific part of the automation process, and communication between this controller and its subordinate devices uses other resources (such as cables) than communication between another controller for another part of the process and its subordinate devices.

If there is no such full independence, the controllers may determine their TSN communication schedules independently from another at least to some extent and then coordinate these schedules, so that any potential conflicts are resolved.

Therefore, a first controller provides first scheduling information that it has computed to a second controller, and/or to a centralized TSN scheduling entity. The scheduling information comprises:
- a first TSN communication schedule determined by the controller;
- an earliest time at which the controller can finish communicating with subordinate devices; and/or
- a latest time at which the controller next needs to communicate with subordinate devices.

Said earliest time and latest time allow to introduce a level of abstraction. Rather than exposing all the detail of its complete control cycle and schedules, each controller may just expose whether it needs to communicate at a particular time or not.

The second controller, and/or the TSN scheduling entity, modifies the first scheduling information based on scheduling information computed by the second controller, and/or on scheduling information determined by a third controller. This modified first scheduling information is then provided to the first controller. The modified information may also contain said abstraction with earliest and latest times. I.e., the first controller may just be told to advance the time of finishing communicating or to delay the time of next communication, leaving the reconfiguration of the detailed schedule vis-à-vis all subordinate devices to the first controller.

Thus, the different controllers may coordinate with each other in a "peer-to-peer" fashion, or they may coordinate with a centralized entity. The "peer-to-peer" approach has the advantage of providing maximum flexibility because each controller may work according to its own scheduling strategy. The finally resulting schedule may then constitute an optimum trade-off given these multiple different scheduling strategies. Having a centralized scheduling entity, however, has the advantage that any changes to the scheduling strategy need to be made only in on single place in the entire TSN. For example, algorithms and/or strategies for the coordination may be updated.

The goal of coordinating and modifying the first scheduling information may, for example, be to avoid that multiple controllers communicate with subordinate devices at the same time. If the multiple controllers need to operate on a same communication resource, such as a cable or a radio frequency, then simultaneous attempts to access this resource may result in both messages colliding and failing to be delivered correctly.

In a particularly advantageous embodiment, at least one communication between the first controller and a subordinate device is scheduled in a time window between a time where the second and/or third controller is scheduled to finish reading data form a subordinate device and a time where the second and/or third controller is next scheduled to write data to a subordinate device. In this manner, the utilization of a shared communication resource, such as a cable or a radio frequency, may be improved without any detriment to the performance. In process control, communication between a controller and its subordinate devices is frequently performed according to a cyclically repeating pattern: In a first stage, the controller reads input data from one or more data sources that characterizes at least the state of the part of the industrial process for which this controller is in charge. The controller then performs computations on this data as per its engineering. When the computations are finished, output data is written to subordinate devices in order to physically act onto the process as it is prescribed by the engineering of the DCS in view of the input data. While the controller is busy computing, it does not need to communicate with any other entity. Therefore, during that time, a communication resource may be reallocated to a controller that has a more urgent need to communicate.

One way of modifying the first scheduling information is offsetting a communication cycle of the first controller against a communication cycle of the second and/or third controller. This is particularly advantageous if communication between the controllers and their respective subordinate devices always happens in repeating cycles of the same length.

Multiple controllers working in a peer-to-peer coordination may elect one master controller that is to supply modified scheduling information to other controllers. In this manner, it is clear to every controller whether its role is to supply or to receive modified scheduling information. This avoids deadlocks where a controller expects to receive scheduling information but is in fact expected to deliver such information.

For example, the elected master controller may operate an Open Platform Communication Unified Architecture, OPC UA, client that delivers modified scheduling information to OPC UA servers running on the other non-master controllers.

In a further particularly advantageous embodiment, the TSN scheduling entity delegates time slices for communication in the TSN network to multiple controllers. Each controller computes a TSN communication schedule such that communication between the controller and its respective to-be-used subordinate devices is performed within the time slices delegated to this controller. In this manner, the individual controllers may perform the planning of their respective activities autonomously, while at the same time some cooperation is enforced from the beginning by means of the slices. After each controller has computed its TSN communication schedule, these schedules are transmitted to the TSN scheduling entity that makes any further amendments needed to make the combination of all TSN communication schedules work.

This delegation of time slices is in some way analogous to the delegation of IPv6 prefixes in a cascade of routers: A main router may, for example, receive a /48 prefix of IPv6 addresses. It may then, for example, assign different /56 sub-prefixes out of the /48 prefix to different subordinate routes, and directly assign addresses from yet another different /56 sub-prefix out of the /48 prefix to client devices.

At least two time slices allocated to different controllers may be chosen to overlap. In particular, the sum of all time slices assigned by the TSN scheduling entity to the different controllers may be more than 100 % of the time. For example, three controllers may each be assigned time slices worth 40 % of the total time. This "overbooking" provides more flexibility in case the demand of one or more controller varies. Any conflict may then be resolved when the TSN scheduling entity receives all the TSN communication schedules and modifies them.

This is in some way analogous to the overbooking of aircraft seats. For most of the time, selling more seats than there are physical seats in the cabin brings about more flexibility and better utilization of the physical seats. This benefit far outweighs the overhead of having to re-book or compensate passengers from time to time.

Whenever a controller computes a TSN communication schedule, this may be based at least in part on one or more of:
- read operations of data from subordinate devices, and/or write operations of data to subordinate devices, that are prescribed by the control logic;
- a time that the controller needs to perform computations that are prescribed by the control logic on data read from at least one subordinate device; and
- a time window during which a subordinate device is busy after a particular read operation or write operation.

For example, the amount of time that a read or write operation takes may depend on the amount of data. The time that the controller needs to perform computations may depend on the complexity and computational cost of the computations prescribed by the control logic.

An exemplary reason why a subordinate device may be busy after a read operation is that some sensor devices need some time to produce the next value of a measurement quantity. For example, some sensors need to integrate the quantity for some time before outputting a value.

An exemplary reason why a subordinate device may be busy after a write operation is that actuators need some time to perform the requested action. For example, a valve needs time to open or close, and a pump needs time to change its speed to a desired value.

The method may be wholly or partially computer-implemented. The invention therefore also provides one or more computer programs with machine readable instructions that, when executed on one or more computers, cause the one or more computers to perform the method described above. In particular, a virtualization platform and one or more hardware controllers may be regarded as computers.

The invention also provides one or more non-transitory storage media and/or download products with the one or more computer programs. A download product is a product that may be sold in an online shop for immediate fulfillment by download. The invention also provides one or more computers with the one or more computer programs, and/or with the one or more non-transitory machine-readable storage media and/or download products.

### DESCRIPTION OF THE FIGURES

In the following, the invention is illustrated using Figures without any intention to limit the scope of the invention. The Figures show:
Figure 1: Exemplary embodiment of the method 100 for operating a distributed control system, DCS 1;
Figure 2: Exemplary flow of information on a simple DCS 1 with one controller 11 and two subordinate devices 2, 3;
Figure 3: Exemplary peer-to-peer coordination between controllers by electing one controller as the master controller;
Figure 4: Exemplary coordination between controllers by means of a centralized TSN scheduling entity;
Figure 5: Exemplary interlaced TSN communication schedules 11a and 12a for two controllers 11, 12.

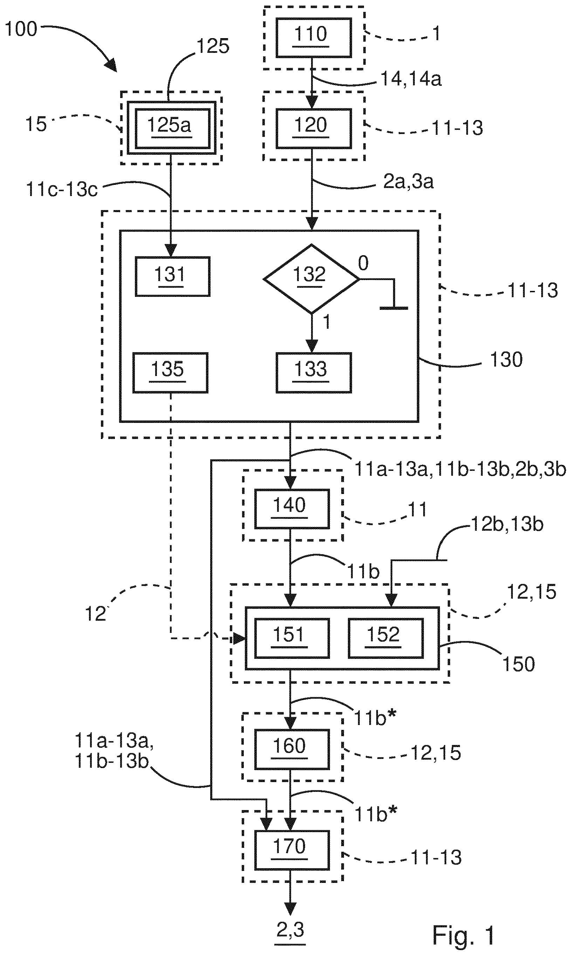

Figure 1 is a schematic flow chart of an embodiment of the method 100 for operating a DCS 1 with multiple controllers 11-13 and subordinate devices 2, 3.

In step 110, a control application 14 is provided. For each controller 11-13 this control application 14 comprises instructions 14a to contact particular to-be-used subordinate devices 2, 3 and perform control logic using these subordinate devices 2, 3.

In step 120, each controller 11-13 obtains information about TSN capabilities 2a, 3a of the to-be-used subordinate devices 2, 3.

In step 130, each controller 11-13 computes a TSN communication schedule 11a-13a for communication between this controller 11-13 and the to-be-used subordinate devices 2, 3. Each such communication schedule 11a-13a may also comprise a corresponding communication schedule 2b, 3b for the to-be-used subordinate devices 2, 3.

In step 140, an exemplary first controller 11 provides first scheduling information 11b to a second controller 12 and/or to a TSN scheduling entity 15. This first scheduling information 11b may, inter alia, comprise the TSN communication schedule 11a.

In step 150, the second controller 12, respectively the TSN scheduling entity 15, modifies the first scheduling information 11b based on scheduling information 12b determined by the second controller 12, and/or based on scheduling information 13b determined by the third controller 13.

In step 160, the second controller 12, respectively the TSN scheduling entity 15, provides the modified first scheduling information 11b* to the first controller 11.

In step 170, each controller 11-13 performs, according to the respective communication schedules 11a-13a with possible amendments 11b*, the control logic with the to-be-used subordinate devices 2, 3.

Optionally, according to block 125, a TSN scheduling entity 15 may delegate time slices 11c-13c to controllers 11-13. According to block 125a, such time slices 11c-13c may be chosen to overlap. Each controller 11-13 may, according to block 131, compute its TSN communication schedule 11a-13a such that communication between the controller 11-13 and its respective to-be-used subordinate devices 2, 3 is performed within the time slices 11c-13c.

According to block 132, it may be checked whether
- a controller 11-13 is the only controller within a switched segment of the TSN network; and
- according to the control logic, this controller 11-13 is only to communicate with subordinate devices 2, 3 within the same segment.

If both conditions are fulfilled (truth value 1), then this controller 11-13 may be allowed to schedule its communication independently from TSN communication schedules 11a-13a computed by other controllers 11-13, according to block 133.

According to block 135, among multiple controllers 11-13, one master controller 12 that is to supply modified scheduling information to other controllers 11, 13 may be elected.

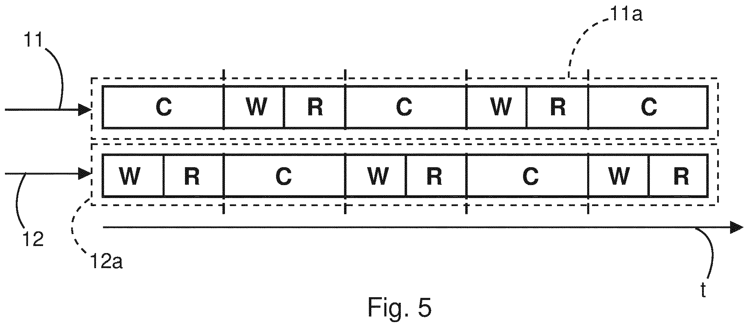

According to block 151, at least one communication between the first controller 11 and a subordinate device 2, 3 may be scheduled in a time window between a time where the second and/or third controller 12, 13 is scheduled to finish reading data form a subordinate device 2, 3 and a time where the second and/or third controller 12, 13 is next scheduled to write data to a subordinate device 2, 3. This interlaced scheduling is shown in Figure 5.

According to block 152, the modifying of the first scheduling information 11b may comprise offsetting a communication cycle of the first controller 11 against a communication cycle of the second and/or third controller 12, 13.

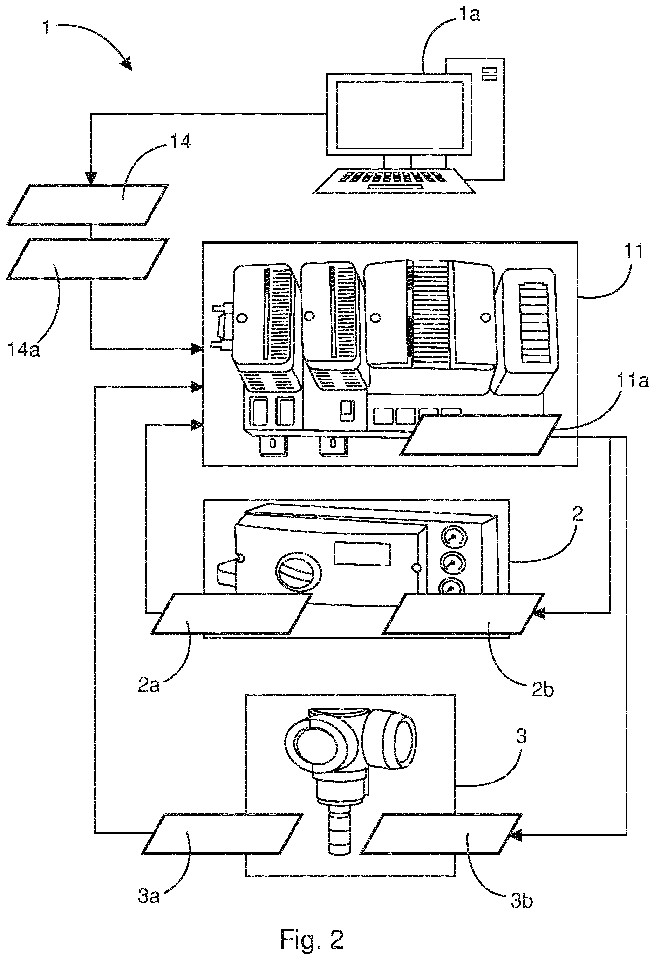

Figure 2 shows an exemplary flow of information on a simple DCS 1 with only one controller 11 and two subordinate devices 2, 3.

An engineering entity 1a of the DCS 1 provides the control application 14 and instructions 14a about which subordinate devices 2, 3 shall be contacted to the controller 11. The controller 11 queries the subordinate devices 2, 3 for their respective TSN capabilities 2a, 3a. The controller 11 then computes a TSN communication schedule 11a for communicating with the subordinate devices 2, 3. This TSN communication schedule 11a also comprises corresponding TSN communication schedules 2b, 3b for the subordinate devices 2, 3.

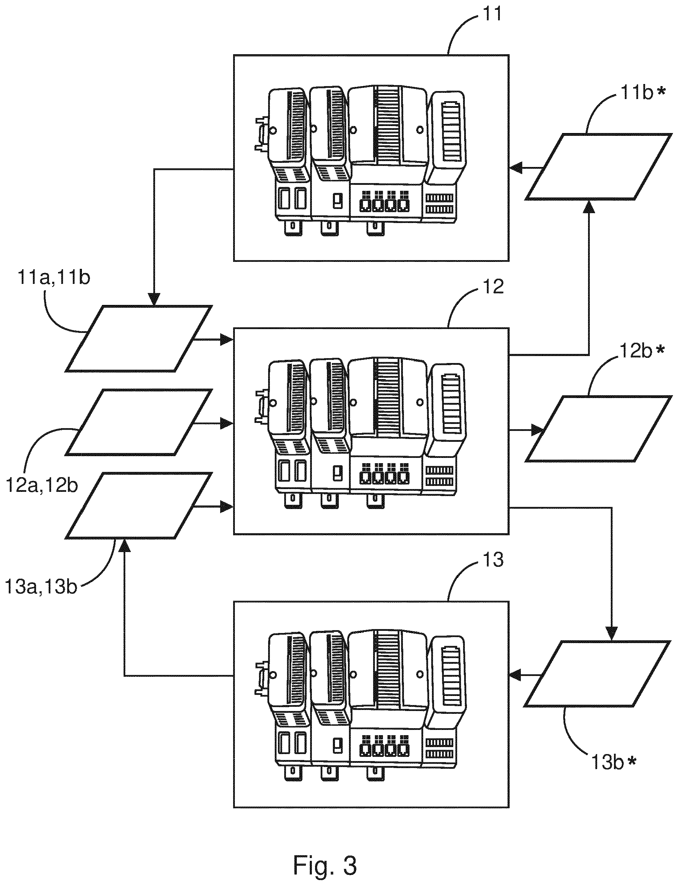

Figure 3 shows a first, peer-to-peer alternative for coordinating TSN communication schedules 11a-13a between controllers 11-13. One controller (controller 12 in this example) is elected master. This master 12 collects TSN communication schedules 11a-13a, and any further scheduling information 11b-13b, from all controllers 11-13. The master 12 then computes modified scheduling information 11b*-13b* (i.e., updated TSN communication schedules and optionally updated values of any further scheduling parameters) such that there is no conflict between schedules 11a-13a, and/or according to any other suitable optimization criterion. The modified scheduling information 11b*-13b* is then provided to the respective controllers 11-13.

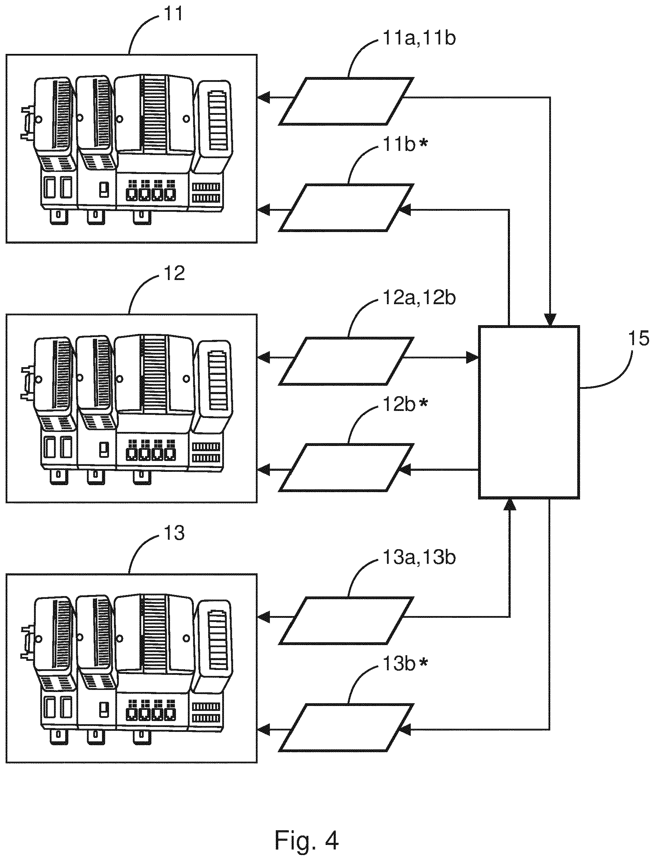

Figure 4 shows a second, centralized alternative for coordinating TSN communication schedules 11a-13a between controllers 11-13. In contrast to Figure 3, all controllers 11-13 have equal roles. They submit their TSN communication schedules 11a-13a, and any other scheduling information 11b-13b, to the TSN scheduling entity 15. The TSN scheduling entity 15 then responds with modified scheduling information 11b*-13b* for use by the respective controllers 11-13.

Figure 5 is an example of interlaced TSN communication schedules 11a, 12a for two controllers 11, 12. Each controller 11, 12 cycles between reading inputs from a subordinate device 2, 3 (phase R), performing control logic computations (phase C), and writing outputs to subordinate devices (phase W). The schedules 11a, 12a are aligned such that when the one controller 11, 12 is in phase C, the respective other controller 11, 12 performs phases Wand R. In this manner, a communication medium that the controllers 11, 12 share may be fully utilized, but the fact that the medium is shared at all does not impede the communication performance of either controller 11 or 12.

### List of reference signs

- 1: distributed control system, DCS
- 1a: engineering entity of DCS 1
- 11-13: controllers of DCS 1
- 11a-13a: TSN communication schedules of controllers 11-13
- 11b-13b: other (abstract) scheduling information of controllers 11-13
- 11b*-13b*: modified scheduling information 11b-13b
- 11c-13c: time slices allocated to controllers 11-13
- 14: engineered control application
- 14a: instructions to contact subordinate devices
- 15: centralized TSN scheduling entity
- 2, 3: subordinate devices
- 2a, 3a: TSN capabilities of subordinate devices 2, 3
- 2b, 3b: TSN communication schedules of subordinate devices 2, 3
- 100: method for operating DCS 1
- 110: providing control application 14, instructions 14a
- 120: obtaining information about TSN capabilities 2a, 3a
- 125: delegating time slices 11c-13c
- 125a: choosing overlapping time slices 11c-13c
- 130: computing TSN communication schedules 11a-13a
- 131: computing schedules 11a-13a within time slices 11c-13c
- 132: checking whether controller 11-13 alone in isolated segment
- 133: allowing controller 11-13 to schedule independently
- 135: electing master 12 among controllers 11-13
- 140: providing scheduling information 11b to controller 12, entity 15
- 150: modifying scheduling information 11b
- 151: interlacing schedules 11a-13a
- 152: offsetting communication cycles of controllers 11-13
- 160: providing modified scheduling information 11b* to controller 11
- 170: performing control logic according to schedules 11a-13b, updates 11b*
- t: time
- C: control computation phase
- R: reading phase
- W: writing phase

## Claims

1. A method (100) for operating a distributed control system, DCS (1), of an industrial plant, wherein the DCS comprises a plurality of controllers (11-13), and each such controller (11-13) is configured to communicate with a plurality of subordinate devices (2, 3) over a time sensitive network, TSN, the method (100) comprising the steps of:
• providing (110), by an engineering entity (1a) of the DCS (1), a control application (14) that comprises, for each controller (11-13), instructions (14a) to contact particular to-be-used subordinate devices (2, 3) and perform control logic using these subordinate devices (2, 3), wherein the control application (14) has been engineered to operate the DCS (1) as a whole and orchestrates the work of the different controllers (11-13);
• obtaining (120), by each controller (11-13), information about TSN capabilities (2a, 3a) of the to-be-used subordinate devices (2, 3);
• computing (130), by each controller (11-13), a TSN communication schedule (11a-13a) for communication between this controller (11-13) and the to-be-used subordinate devices (2, 3);
• providing (140), by a first controller (11), to a second controller (12), and/or to a TSN scheduling entity (15), first scheduling information (11b) computed by this first controller (11), wherein this scheduling information (11b) comprises:
∘ a first TSN communication schedule (11a) determined by the first controller (11); and/or
∘ an earliest time at which the first controller (11) can finish communicating with subordinate devices (2, 3); and/or
∘ a latest time at which the first controller (11) next needs to communicate with subordinate devices (2, 3);
• modifying (150), by the second controller (12), respectively by the TSN scheduling entity (15), based on scheduling information (12b) computed by the second controller (12b), and/or on scheduling information (13b) determined by a third controller (13), the first scheduling information (11b); and
• providing (160), by the second controller (12), respectively by the TSN scheduling entity (15), the modified first scheduling information (11b*) to the first controller (11); and
• performing (170), by each controller (11-13), according to the communication schedule (11a-13a), the control logic with the to-be-used subordinate devices (2, 3).

2. The method (100) of claim 1, wherein the first scheduling information (11b) is modified with the goal of avoiding that multiple controllers (11-13) communicate with subordinate devices (2, 3) at the same time.

3. The method (100) of any one of claims 1 to 2, wherein at least one communication between the first controller (11) and a subordinate device (2, 3) is scheduled (151) in a time window between a time where the second and/or third controller (12, 13) is scheduled to finish reading data form a subordinate device (2, 3) and a time where the second and/or third controller (12, 13) is next scheduled to write data to a subordinate device (2, 3).

4. The method (100) of any one of claims 1 to 3, wherein the modifying of the first scheduling information (11b) comprises offsetting (152) a communication cycle of the first controller (11) against a communication cycle of the second and/or third controller (12, 13).

5. The method (100) of any one of claims 1 to 4, further comprising: electing (135), among multiple controllers (11-13), one master controller as the second controller (12) that is to supply modified scheduling information to other controllers (11, 13).

6. The method (100) of claim 5, wherein modified scheduling information (11b*) is delivered by an Open Platform Communication Unified Architecture, OPC UA, client on the master controller (12) to OPC UA servers on the other controllers (11, 13).

7. The method (100) of any one of claims 1 to 6, further comprising:
• delegating (125), by the TSN scheduling entity (15), time slices (11c-13c) for communication in the TSN network to multiple controllers (11-13); and
• computing (131), by each controller (11-13), a TSN communication schedule (11a-13a) such that communication between the controller (11-13) and its respective to-be-used subordinate devices (2, 3) is performed within the time slices (11c-13c) delegated to this controller (11-13).

8. The method (100) of claim 7, wherein at least two time slices (11c-13c) allocated to different controllers (11-13) are chosen (125a) to overlap.

9. The method (100) of any one of claims 1 to 8, wherein each controller (11-13) computes a TSN communication schedule (11a-13a) based at least in part on one or more of:
• read operations of data from subordinate devices (2, 3), and/or write operations of data to subordinate devices (2, 3), that are prescribed by the control logic;
• a time that the controller (11-13) needs to perform computations that are prescribed by the control logic on data read from at least one subordinate device (2, 3); and
• a time window during which a subordinate device (2, 3) is busy after a particular read operation or write operation.

10. The method (100) of any one of claims 1 to 9, wherein TSN capabilities of at least one subordinate device (2, 3) are obtained by an OPC UA client on a controller (11-13) querying an OPC UA server on at least one subordinate device (2, 3).

11. The method (100) of any one of claims 1 to 10, wherein the TSN comprises different segments that are separated from one another by Ethernet switching, and wherein the method further comprises: in response to determining (132) that a controller (11-13) is the only controller (11-13) within a segment and that, according to the control logic, this controller (11-13) is only to communicate with subordinate devices (2, 3) within the same segment, allowing (133) this controller (11-13) to schedule this communication independently from TSN communication schedules (11a-13a) computed by other controllers (11-13).

12. A computer program, comprising machine-readable instructions that, when executed by one or more computers, cause the one or more computers to perform the method (100) of any one of claims 1 to 11.

13. A non-transitory storage medium and/or download product, comprising the computer program of claim 12.

14. One or more computers with at least a processor and a non-transitory storage medium, with the computer program of claim 12, and/or with the non-transitory storage medium and/or download product of claim 13.

## Patentansprüche

1. Verfahren (100) zum Betreiben eines verteilten Steuerungssystems, DCS (1), einer Industrieanlage, wobei das DCS eine Mehrzahl von Controllern (11-13) umfasst und jeder solche Controller (11-13) dazu eingerichtet ist, über ein zeitsensitives Netzwerk, TSN, mit einer Mehrzahl untergeordneter Geräte (2, 3) zu kommunizieren, wobei das Verfahren (100) die folgenden Schritte umfasst:
• Bereitstellen (110) einer Steuerungsanwendung (14), die für jeden Controller (11-13) Anweisungen (14a) umfasst, bestimmte zu verwendende untergeordnete Geräte (2, 3) zu kontaktieren und unter Nutzung dieser untergeordneten Geräte (2, 3) Steuerlogik auszuführen, durch eine Engineering-Entität (1a) des DCS (1), wobei die Steuerungsanwendung (14) dazu konstruiert ist, das DCS (1) als Ganzes zu betreiben, und die Arbeit der verschiedenen Controller (11-13) orchestriert;
• Beschaffen (120) von Information über die TSN-Fähigkeiten (2a, 3a) der zu verwendenden untergeordneten Geräte (2, 3) durch jeden Controller (11-13);
• Berechnen (130), durch jeden Controller (11-13), eines TSN-Kommunikations-Zeitplans (11a-13a) für die Kommunikation zwischen diesem Controller (11-13) und den zu verwendenden untergeordneten Geräten (2, 3);
• Bereitstellen (140), durch einen ersten Controller (11), an einen zweiten Controller (12) und/oder an eine TSN-Zeitplanungs-Entität (15), erster von diesem ersten Controller (11) berechneter Zeitplan-Information (11b), wobei diese Zeitplan-Information (11b)
∘ einen ersten, von dem ersten Controller (11) ermittelten TSN-Kommunikations-Zeitplan (11a); und/oder
∘ eine früheste Zeit, zu der der erste Controller mit der Kommunikation mit untergeordneten Geräten (2, 3) fertig werden kann; und/oder
∘ eine späteste Zeit, zu der der erste Controller (11) das nächste Mal mit untergeordneten Geräten (2, 3) kommunizieren muss,
umfasst;
• Abändern (150) der ersten Zeitplan-Information (11b) durch einen zweiten Controller (12), beziehungsweise durch die TSN-Zeitplanungs-Entität (15), basierend auf vom zweiten Controller (12b) berechneter Zeitplan-Information (12b), und/oder auf von einem dritten Controller (13) ermittelter Zeitplan-Information (13b); und
• Bereitstellen (160) der abgeänderten ersten Zeitplan-Information (11b*) an den ersten Controller (11) durch den zweiten Controller (12), beziehungsweise durch die TSN-Zeitplanungs-Entität (15); und
• Ausführen (170) der Steuerlogik mit den zu verwendenden untergeordneten Geräten (2, 3) durch jeden Controller (11-13) anhand des Kommunikations-Zeitplans (11a-13a).

2. Verfahren (100) nach Anspruch 1, wobei die erste Zeitplan-Information (11b) mit dem Ziel verändert wird, zu vermeiden, dass mehrere Controller (11-13) zur gleichen Zeit mit untergeordneten Geräten (2, 3) kommunizieren.

3. Verfahren (100) nach einem der Ansprüche 1 bis 2, wobei mindestens eine Kommunikation zwischen dem ersten Controller (11) und einem untergeordneten Gerät (2, 3) in einem Zeitfenster zwischen einer Zeit, zu der der zweite und/oder dritte Controller (12, 13) planmäßig mit dem Lesen von Daten von einem untergeordneten Gerät (2, 3) fertig werden, und einer Zeit, zu der der zweite und/oder dritte Controller (12, 13) das nächste Mal planmäßig Daten an das untergeordnete Gerät (2, 3) schreiben, geplant wird (151).

4. Verfahren (100) nach einem der Ansprüche 1 bis 3, wobei das Abändern der ersten Zeitplan-Information (11b) umfasst, einen Kommunikationszyklus des ersten Controllers (11) gegen einen Kommunikationszyklus des zweiten und/oder dritten Controllers (12, 13) zu versetzen (152).

5. Verfahren (100) nach einem der Ansprüche 1 bis 4, weiterhin umfassend: Wählen (135), aus mehreren Controllern (11-13), eines Master-Controllers als den zweiten Controller (12), der abgeänderte Zeitplan-Information an andere Controller (11, 13) liefert.

6. Verfahren (100) nach Anspruch 5, wobei abgeänderte Zeitplan-Information (11b*) durch einen Open Platform Communication Unified Architecture, OPC UA, Client auf dem Master-Controller (12) an OPC UA-Server auf den anderen Controllern (11, 13) geliefert wird.

7. Verfahren (100) nach einem der Ansprüche 1 bis 6, weiterhin umfassend:
• Delegieren (125) von Zeitscheiben (11c-13c) für die Kommunikation in dem TSN-Netzwerk an mehrere Controller (11-13) durch die TSN-Zeitplanungs-Entität (15); und
• Berechnen (131) eines TSN-Kommunikations-Zeitplans (11a-13a) durch jeden Controller (11-13), so dass Kommunikation zwischen dem Controller (11-13) und seinen jeweiligen zu verwendenden untergeordneten Geräten (2, 3) innerhalb der Zeitscheiben (11c-13c), die an diesen Controller (11-13) delegiert sind, ausgeführt wird.

8. Verfahren (100) nach Anspruch 7, wobei mindestens zwei Zeitscheiben (11c-13c), die unterschiedlichen Controllern (11-13) zugewiesen sind, so ausgewählt werden (125a), dass sie sich überlappen.

9. Verfahren (100) nach einem der Ansprüche 1 bis 8, wobei jeder Controller (11-13) einen TSN-Kommunikations-Zeitplan (11a-13a) basierend mindestens zum Teil auf einem oder mehreren von:
• Leseoperationen von Daten von untergeordneten Geräten (2, 3), und/oder Schreiboperationen von Daten an untergeordnete Geräte (2, 3),die durch die Steuerlogik vorgeschrieben sind;
• einer Zeit, die der Controller (11-13) benötigt, um Berechnungen, die von der Steuerlogik vorgeschrieben sind, auf von mindestens einem untergeordneten Gerät (2, 3) gelesenen Daten auszuführen; und
• einem Zeitfenster, während dessen das untergeordnete Gerät (2, 3) nach
einer bestimmten Leseoperation oder Schreiboperation beschäftigt ist, berechnet.

10. Verfahren (100) nach einem der Ansprüche 1 bis 9, wobei TSN-Fähigkeiten mindestens eines untergeordneten Geräts (2, 3) durch einen OPC UA-Client auf einem Controller (11-13), der einen OPC UA-Server auf mindestens einem untergeordneten Gerät (2, 3) abfragt, beschafft werden.

11. Verfahren (100) nach einem der Ansprüche 1 bis 10, wobei das TSN unterschiedliche Segmente umfasst, die voneinander durch Ethernet-Switching getrennt sind, und wobei das Verfahren weiterhin umfasst: in Antwort auf die Feststellung (132), dass ein Controller (11-13) der einzige Controller (11-13) in einem Segment ist und dass nach der Steuerlogik dieser Controller (11-13) nur mit untergeordneten Geräten (2, 3) im gleichen Segment kommunizieren soll, Erlauben (133), dass dieser Controller (11-13) diese Kommunikation unabhängig von TSN-Kommunikations-Zeitplänen (11a-13a), die von anderen Controllern (11-13) berechnet werden, plant.

12. Computerprogramm, enthaltend maschinenlesbare Anweisungen, die, wenn sie auf einem oder mehreren Computern ausgeführt werden, den einen oder die mehreren Computer dazu veranlassen, das Verfahren (100) nach einem der Ansprüche 1 bis 11 auszuführen.

13. Nicht-flüchtiges Speichermedium und/oder Downloadprodukt mit dem Computerprogramm nach Anspruch 12.

14. Ein oder mehrere Computer mit mindestens einem Prozessor und einem nicht-flüchtigen Speichermedium, mit dem Computerprogramm nach Anspruch 12, und/oder mit dem nicht-flüchtigen Speichermedium und/oder Downloadprodukt nach Anspruch 13.

## Revendications

1. Procédé (100) d'exploitation d'un système de commande distribué, DCS (1), d'une installation industrielle, dans lequel le DCS comprend une pluralité de contrôleurs (11-13), et chacun de ces contrôleurs (11-13) est configuré pour communiquer avec une pluralité de dispositifs subordonnés (2, 3) sur un réseau sensible au temps, TSN, le procédé (100) comprenant les étapes suivantes :
• fournir (110), par une entité d'ingénierie (1a) du DCS (1), une application de commande (14) qui comprend, pour chaque contrôleur (11-13), des instructions (14a) pour contacter des dispositifs subordonnés particuliers à utiliser (2, 3) et exécuter une logique de commande en utilisant ces dispositifs subordonnés (2, 3), l'application de commande (14) ayant été conçue pour faire fonctionner le DCS (1) dans son ensemble et orchestrer le travail des différents contrôleurs (11-13) ;
• obtenir (120), par chaque contrôleur (11-13), des informations sur les capacités TSN (2a, 3a) des dispositifs subordonnés (2, 3) à utiliser ;
• calculer (130), par chaque contrôleur (11-13), un programme de communication TSN (11a-13a) pour la communication entre ce contrôleur (11-13) et les dispositifs subordonnés (2, 3) à utiliser ;
• fournir (140), par un premier contrôleur (11), à un deuxième contrôleur (12) et/ou à une entité de programmation TSN (15), des premières informations de programmation (11b) calculées par ce premier contrôleur (11), ces informations de programmation (11b) comprenant :
∘ un premier programme de communication TSN (11a) déterminé par le premier contrôleur (11) ; et/ou
∘ une heure au plus tôt à laquelle le premier contrôleur (11) peut finir de communiquer avec les dispositifs subordonnés (2, 3) ; et/ou
∘ l'heure la plus tardive à laquelle le premier contrôleur (11) doit ensuite communiquer avec les dispositifs subordonnés (2, 3) ;
• modifier (150), par le deuxième contrôleur (12), respectivement par l'entité de programmation TSN (15), sur la base des informations de programmation (12b) calculées par le deuxième contrôleur (12b), et/ou des informations de programmation (13b) déterminées par un troisième contrôleur (13), les premières informations de programmation (11b) ; et
• fournir (160), par le deuxième contrôleur (12), respectivement par l'entité de programmation TSN (15), les premières informations de programmation modifiées (11b*) au premier contrôleur (11) ; et
• exécuter (170), par chaque contrôleur (11-13), conformément au programme de communication (11a-13a), la logique de commande avec les dispositifs subordonnés à utiliser (2, 3).

2. Procédé (100) selon la revendication 1, dans lequel les premières informations de programmation (11b) sont modifiées dans le but d'éviter que plusieurs contrôleurs (11-13) communiquent avec des dispositifs subordonnés (2, 3) en même temps.

3. Procédé (100) selon l'une quelconque des revendications 1 à 2, dans lequel au moins une communication entre le premier contrôleur (11) et un dispositif subordonné (2, 3) est programmée (151) dans une fenêtre temporelle entre un moment où le deuxième contrôleur et/ou le troisième contrôleur (12, 13) sont programmés pour terminer la lecture des données d'un dispositif subordonné (2, 3) et un moment où le deuxième contrôleur et/ou le troisième contrôleur (12, 13) sont ensuite programmés pour écrire des données dans un dispositif subordonné (2, 3).

4. Procédé (100) selon l'une quelconque des revendications 1 à 3, dans lequel la modification des premières informations de programmation (11b) comprend le décalage (152) d'un cycle de communication du premier contrôleur (11) par rapport à un cycle de communication du deuxième contrôleur et/ou du troisième contrôleur (12, 13) .

5. Procédé (100) selon l'une quelconque des revendications 1 à 4, comprenant en outre : l'élection (135), parmi plusieurs contrôleurs (11-13), d'un contrôleur maître en tant que deuxième contrôleur (12) qui doit fournir des informations de programmation modifiées aux autres contrôleurs (11, 13).

6. Procédé (100) selon la revendication 5, dans lequel les informations de programmation modifiées (11b*) sont fournies par un client OPC UA (Open Platform Communication Unified Architecture) sur le contrôleur maître (12) aux serveurs OPC UA sur les autres contrôleurs (11, 13).

7. Procédé (100) selon l'une quelconque des revendications 1 à 6, comprenant en outre les étapes suivantes :
• déléguer (125), par l'entité de programmation TSN (15), des tranches de temps (11c-13c) pour la communication dans le réseau TSN à plusieurs contrôleurs (11-13) ; et
• calculer (131), par chaque contrôleur (11-13), un programme de communication TSN (11a-13a) de sorte que la communication entre le contrôleur (11-13) et ses dispositifs subordonnés respectifs à utiliser (2, 3) soit effectuée dans les tranches de temps (11c-13c) déléguées à ce contrôleur (11-13).

8. Procédé (100) selon la revendication 7, dans lequel au moins deux tranches de temps (11c-13c) attribuées à différents contrôleurs (11-13) sont choisies (125a) pour se chevaucher.

9. Procédé (100) selon l'une quelconque des revendications 1 à 8, dans lequel chaque contrôleur (11-13) calcule un programme de communication TSN (11a-13a) basé au moins en partie sur un ou plusieurs des éléments suivants :
• des opérations de lecture de données à partir de dispositifs subordonnés (2, 3), et/ou des opérations d'écriture de données vers des dispositifs subordonnés (2, 3), qui sont prescrites par la logique de commande ;
• le temps nécessaire au contrôleur (11-13) pour effectuer les calculs prescrits par la logique de commande sur les données lues à partir d'au moins un dispositif subordonné (2, 3) ; et
• une fenêtre temporelle pendant laquelle un dispositif subordonné (2, 3) est occupé après une opération de lecture ou d'écriture particulière.

10. Procédé (100) selon l'une quelconque des revendications 1 à 9, dans lequel les capacités TSN d'au moins un dispositif subordonné (2, 3) sont obtenues par un client OPC UA sur un contrôleur (11-13) interrogeant un serveur OPC UA sur au moins un dispositif subordonné (2, 3).

11. Procédé (100) selon l'une quelconque des revendications 1 à 10, dans lequel le TSN comprend différents segments qui sont séparés les uns des autres par une commutation Ethernet, et dans lequel le procédé comprend en outre l'étape suivante : en réponse à la détermination (132) qu'un contrôleur (11-13) est le seul contrôleur (11-13) dans un segment et que, selon la logique de commande, ce contrôleur (11-13) doit seulement communiquer avec des dispositifs subordonnés (2, 3) dans le même segment, permettre (133) à ce contrôleur (11-13) de programmer cette communication indépendamment des programmes de communication TSN (11a-13a) calculés par d'autres contrôleurs (11-13).

12. Programme informatique, comprenant des instructions lisibles par machine qui, lorsqu'elles sont exécutées par un ou plusieurs ordinateurs, amènent les un ou plusieurs ordinateurs à exécuter le procédé (100) de l'une quelconque des revendications 1 à 11.

13. Support de stockage non transitoire, et/ou produit de téléchargement, contenant le programme informatique de la revendication 12.

14. Un ou plusieurs ordinateurs munis d'au moins un processeur et d'un support de stockage non transitoire, avec le programme informatique de la revendication 12, et/ou avec le support de stockage non transitoire et/ou le produit de téléchargement de la revendication 13.
